(19) Europäisches Patentamt

European Patent Office

Office européen des brevets

(11) Veröffentlichungsnummer : **0 031 554**
**B1**

(12) **EUROPÄISCHE PATENTSCHRIFT**

(45) Veröffentlichungstag der Patentschrift :
13.06.84

(21) Anmeldenummer : 80108036.7

(22) Anmeldetag : 19.12.80

(51) Int. Cl.³ : **A 01 G 27/00**

(54) **Kulturtopf.**

(30) Priorität : 21.12.79 DE 2951628

(43) Veröffentlichungstag der Anmeldung :
08.07.81 Patentblatt 81/27

(45) Bekanntmachung des Hinweises auf die Patenterteilung : 13.06.84 Patentblatt 84/24

(84) Benannte Vertragsstaaten :
**AT BE CH FR GB IT LI NL SE**

(56) Entgegenhaltungen :
**EP-A- 0 016 352**
**DE-A- 2 610 613**
**US-A- 2 072 172**

(73) Patentinhaber : **LEIFHEIT INTERNATIONAL GmbH**
**Leifheitstrasse**
**D-5408 Nassau/Lahn (DE)**

(72) Erfinder : **Schüfer, Dieter**
**Windener Strasse 56**
**D-5408 Nassau/Lahn (DE)**

## Beschreibung

Die Erfindung betrifft einen Kulturtopf für eine Einrichtung zur Versorgung von Topfpflanzen gemäß dem Oberbegriff des Anspruchs 1.

Ein derartiger Kulturtopf wurde zum Beispiel durch die DE-A 26 10 613 bekannt. Dabei ist der Kulturtopf auf eine Einheit mit senkrechtem Saugdocht aufgesteckt und zusammen mit dieser in einem Umtopf, der als Wasserreservoir dient, angeordnet. Nachteilig an dieser Anordnung ist die direkte Verbindung des Saugdochtes mit der Blumenerde. Diese saugt sich bis zur absoluten Sättigung voll, sodaß die Pflanze überwässert wird. Dies führt in Verbindung mit dem Erdreich zu Fäulniserscheinungen am Wurzelwerk.

Der Saugdocht wird senkrecht in ein vorhandenes Loch des Kulturtopfes mittels Hilfsmitteln eingedrückt. Die Dochtstärke orientiert sich dabei zwangsläufig an dem vorhandenen Loch im Kulturtopf, in aller Regel ein Belüftungsloch. Berücksichtigt man dann noch das Hilfsmittel zum Einschieben, zum Beispiel ein Kunststoffteil, so bleibt für den Docht nur noch ein recht kleiner Querschnitt. Dieser ist, wie ausgeführt, im Normalfall für die Bewässerung der Pflanze voll ausreichend und führt zur Überfeuchtung. Tritt aber nach längerer Urlaubsabwesenheit oder ganz einfach aus Vergesslichkeit ein Austrocknen des Kulturtopfes ein, so ist beim Befüllen des Wasserreservoirs zwar ein Durchfeuchten des Saugdochtes möglich, aber der Übergang von Saugdocht zur Erde sehr unsicher. Dies resultiert aus der unterschiedlichen Kapillarwirkung des Dochtes sowie der Erde und aus der nur linienförmigen oder zumindest doch kleinflächigen Berührung des Dochtes mit dem Erdreich. Dieser Mangel wird durch unterschiedliche Korngröße des Erdreiches noch verstärkt. Die Verwendung einer Mischerde, beziehungsweise eines Granulates, wie zum Beispiel Lavalit gemischt mit Steinwolle und Erde, ist nicht mehr möglich.

Ein weiterer Nachteil der Dochtanordnung gemäß dem Stand der Technik ist in seiner Stoßrichtung zu sehen. Die Pflanzen werden heute allgemein in gitterförmigen, kleinen Anzuchttöpfen herangezogen und erst nach einer bestimmten Zeit in den Kulturtopf umgepflanzt. Bei dieser Umpflanzung wird aber der gitterförmige Anzuchttopf nicht entfernt. Dieser Anzuchttopf ist beim Einführen des Dochtes hinderlich und macht es teilweise erforderlich, die Pflanze total neu einzupflanzen, weil der Anzuchttopf nicht durchstoßen werden kann. Aber auch bei pflanzen in Kulturtöpfen ohne Anzuchttopf ist das senkrechte Einführen des Dochtes äußerst problematisch, weil dessen Zielrichtung die Primärwurzeln sind. Diese Primärwurzeln gehen über die Kronen- und Seitenwurzeln in die Sekundärwurzeln mit den Wurzelhaaren über und sind der Hauptlebensnerv der Pflanze. Beim senkrechten Einschieben des Dochtes werden sehr leicht Kronenwurzeln abgetrennt oder Zellen des Primärwurzelstammes beschädigt. Dies führt zum Anfaulen des Wurzelsystemes und somit zum Absterben der Pflanze. Zudem ist das Heranführen des Wassers speziell in diesen Bereich ungünstig, weil es praktisch nur von den Wurzelhaaren aufgenommen werden kann.

In der nicht vorveröffentlichten EP-A-16352 ist ein Kulturtopf mit einer schlitzförmigen Öffnung mit einer Einführschräge zur Verbindung mit einer Einrichtung zur Versorgung von Topfpflanzen mit Wasser beschrieben. Die schlitzförmige öffnung mit Einführschräge dient dazu, einen Adapter mit Saugdocht aufzunehmen. Die gesamte Einrichtung wird derart gehandhabt, daß der Pflanzenfreund die Pflanzen in diesem speziellen Kulturtopf mit einer schlitzförmigen Öffnung erwirbt. Dieser Kulturtopf wird mit einer auf einer Zunge einen Saugdocht tragenden Einheit gekoppelt. Dies geschieht dadurch, daß die Zunge in die schlitzförmige Öffnung eingeführt wird. Es hat sich nun in der Praxis gezeigt, daß die funktionelle Zuordnung der Zunge zu der schlitzförmigen öffnung für einen Laien Schwierigkeiten bereitet, so daß der Einrichtung umfangreiche, erklärende Broschüren beigelegt werden müssen.

Aufgabe der vorliegenden Erfindung ist es, einen einfache und sichere Kopplung zwischen Kulturtopf und Dochtträger zu ermöglichen und dahingehend weiterzubilden, daß die richtige funktionelle Zuordnung zwischen diesen Teilen gesichert ist.

Dies wird erfindungsgemäß mit den kennzeichnenden Merkmalen des Anspruchs 1 erreicht. Damit wird erreicht, daß auch ein Verbraucher, der nie zuvor einen derartigen Kulturtopf verwendet hat, ohne zusätzliche Anleitung diesen mit einer Versorgungseinrichtung koppeln kann. Der Gegenstand spricht für sich. Eine sichere, störungsfreie Funktion ist gewährleistet.

Weitere vorteilhafte Ausgestaltungen sind den Unteransprüchen zu entnehmen. So wird durch die unterschiedliche Tiefe der Einführschräge erreicht, daß praktisch keine Unterbrechung in der Auflage des Kulturtopfbodens erfolgt und ein sicherer Stand immer gewährleistet bleibt.

Aus fertigungstechnischen Gründen, sei es beim Tiefziehen oder Spritzen, kann es sehr vorteilhaft sein, die öffnung lediglich in Form einer durchtrennbaren Dünnstelle anzudeuten. Eine derartige Ausführung bringt aber auch von der Handhabung her Vorteile. So wird dadurch verhindert, daß bei der Anzucht die öffnung von Wurzelwerk durchwachsen wird und so die spätere Einführung der Zunge mit Saugdocht erschwert wird.

Als weitere Handhabungsklarstellung ist am unteren Rand der Topfwand ein zum Pfeil weisender Hinweispfeil vorgesehen. Dieser Hinweispfeil wird von einem Adapter, dieser Adapter beinhaltet die Zunge mit Saugdocht, aufnehmenden Sockel begrenzt. Damit ist eine absolut problemlose Handhabung der Einrichtung zur Versorgung von Topfpflanzen im Zusammenwirken mit dem erfindungsgemäßen Kulturtopf gewährleistet. Dies auch dann, wenn beide Teile, was die Regel ist, völlig unabhängig voneinander erworben wurden.

Ein Ausführungsbeispiel der Erfindung wird im folgenden anhand der Zeichnungen näher erläutert. Es zeigen :

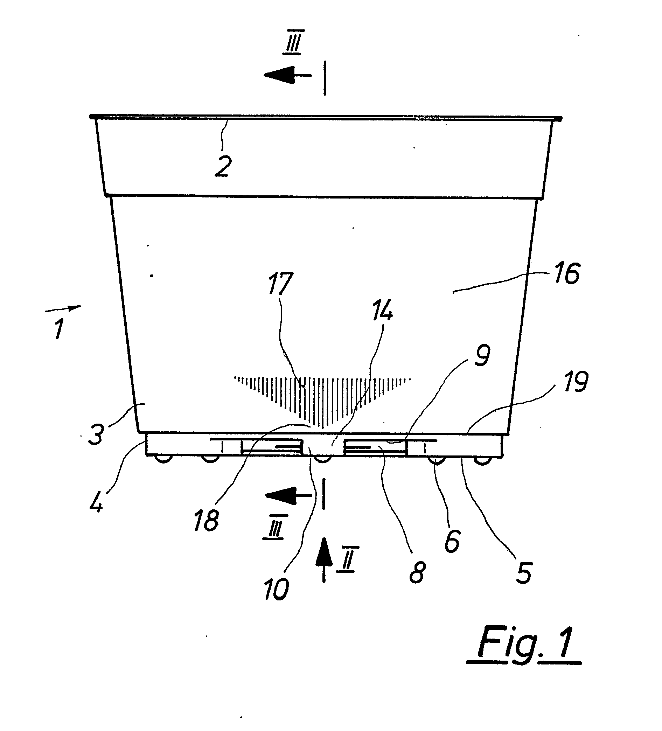

Figur 1   eine Ansicht eines Kulturtopfes mit Hinweispfeil und Pfeil,

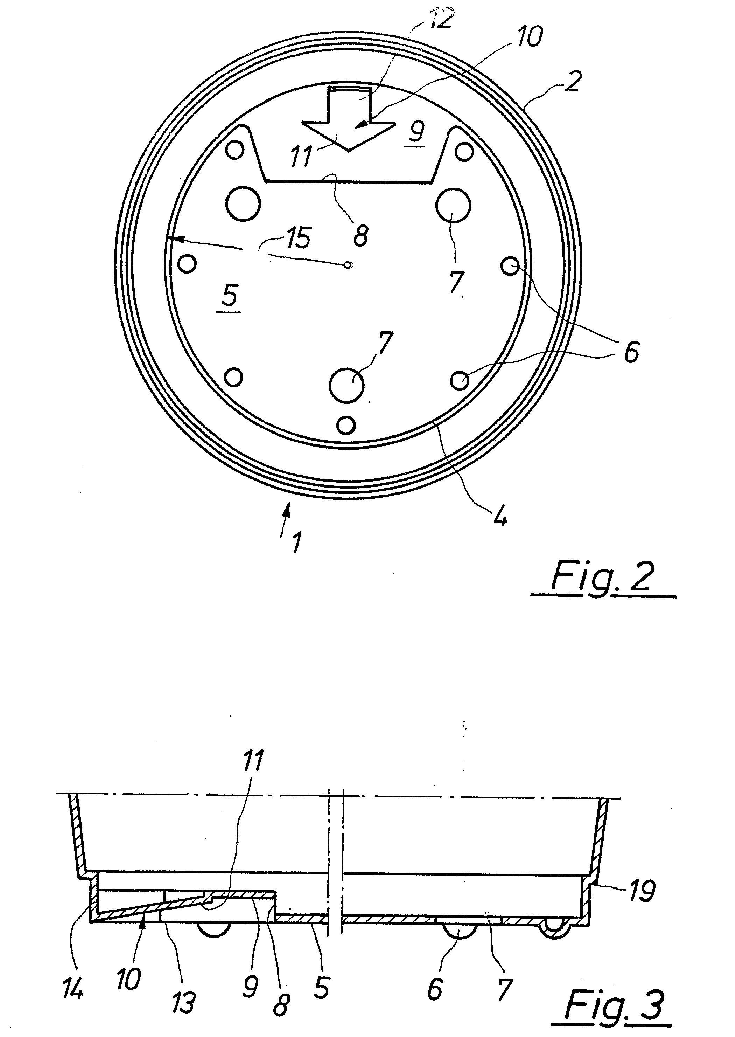

Figur 2   eine Ansicht gemäß der Richtung II in Figur 1 und

Figur 3   einen Schnitt gemäß der Linie III-III in Figur 1.

Ein Kulturtopf 1 mit einem Versteifungsrand 2 wird im unteren Bereich 3 von einem Sockel 4 begrenzt und schließt mit dem Kulturtopfboden 5 ab. Am Kulturtopfboden 5 sind Distanznoppen 6 vorgesehen. Sie ermöglichen zusammen mit den Lüftungsbohrungen 7 eine zusätzliche Sauerstoffzufuhr zu den Wurzeln.

Der Kulturtopfboden 5 ist im Bereich einer Öffnung 8 zu einer Einführfläche 9 abgesenkt. Die Einführfläche 9 liegt parallel zum Kulturtopfboden 5.

Aus dieser Einführfläche 9 ist eine Einführschräge 10 in Form eines Pfeiles ausgeformt. Dabei liegt die Pfeilspitze 11 etwa auf dem Niveau der Einführfläche 9, während das Pfeilende 12 auf dem Niveau 13 des Kulturtopfbodens 5 liegt.

Um den Kreis der Distanznoppen 6 zu schließen, kann das Pfeilende 12 ebenfalls mit einem derartigen Noppen versehen werden.

Die Rückwand 14 des Pfeilendes 11 ist mit dem Radius 15 ausgeführt ; dieser Radius entspricht dem Radius des Sockels 4.

Auf der Topfwand 16 ist im unteren Bereich 3 ein Hinweispfeil 17, der dreieckförmig ausgeführt ist, vorgesehen, dessen Spitze 18 auf das Pfeilende 12 weist und an der Kante 19 des Sockels 4 endet.

Bezugszeichenliste

1 Kulturtopf
2 Versteifungsrand
3 Unterer Bereich
4 Sockel
5 Kulturtopfboden
6 Distanznoppen
7 Lüftungsbohrung
8 Öffnung
9 Einführfläche
10 Einführschräge
11 Pfeilspitze
12 Pfeilende
13 Niveau
14 Rückwand
15 Radius
16 Topfwand
17 Hinweispfeil
18 Spitze
19 Kante

## Ansprüche

1. Kulturtopf für eine Einrichtung zur Versorgung von Topfpflanzen mit Wasser, Luft und gegebenenfalls Nährstoffen, der in seiner Bodenfläche eine Öffnung zur Aufnahme eines Dochtträgers mit Docht besitzt, dadurch gekennzeichnet, daß die Öffnung (8) schlitzförmig ausgeführt und ihr eine Einführschräge (10) zugeordnet ist, und daß die Einführschräge (10) in Form eines Pfeiles (10) ausgebildet ist.

2. Kulturtopf nach Anspruch 1, dadurch gekennzeichnet, daß das der Pfeilspitze (11) entgegengesetzte Ende des Pfeiles (10) auf dem Niveau (13) des Kulturtopfbodens (5) liegt.

3. Kulturtopf nach Anspruch 1 und 2, dadurch gekennzeichnet, daß der Pfeil (10) zu einer parallel zum Kulturtopfboden (5) liegenden Einführfläche (9) erhaben angeordnet ist und, mit der Pfeilspitze (11) vom Niveau dieser Einführfläche (9) ausgehend, stetig auf Kulturtopfbodenniveau (13) ansteigt.

4. Kulturtopf nach Anspruch 3, dadurch gekennzeichnet, daß die Pfeilspitze (11) bis an die schlitzförmige Öffnung (8) herangeführt ist.

5. Kulturtopf nach Anspruch 4, dadurch gekennzeichnet, daß die Öffnung in Form einer durchtrennbaren Dünnstelle ausgeführt ist.

## Claims

1. Propagating pot for a device for supplying pot plants with water, air and, if appropriate, nutrients, the bottom face of the pot having an opening which is to receive a wick carrier with a wick, characterised in that the opening (8) has the shape of a slot and is associated with an insertion bevel (10), and that the insertion bevel (10) is made in the form of an arrow (10).

2. Propagating pot according to Claim 1, characterised in that that end of the arrow (10) which is remote from the tip (11) of the arrow is located at the level (13) of the bottom (5) of the propagating pot.

3. Propagating pot according to Claim 1 and 2, characterised in that the arrow (10) is arranged to be raised towards an insertion surface (9) lying parallel to the bottom (5) of the propagating pot and, starting with the tip (11) of the arrow from the level of this insertion surface (9), steadily rises to the level (13) of the bottom of the propagating pot.

4. Propagating pot according to Claim 3, characterised in that the tip (11) of the arrow is taken as far as the slot-shaped opening (8).

5. Propagating pot according to Claim 4, characterised in that the opening is made in the form of a thin area which can be split.

## Revendications

1. Pot de culture prévu pour un dispositif destiné à alimenter des plantes en pots au moyen d'eau, d'air et le cas échéant de substances nutritives, qui comporte, dans sa face de fond, une ouverture destinée à recevoir un porte-mèche et une mèche, caractérisé en ce que l'ouverture (8) a la forme d'une fente et une rampe d'introduction (10) y est associée, cette rampe (10) ayant la forme d'une flèche.

2. Pot de culture suivant la revendication 1, caractérisé en ce que l'extrémité de la flèche (10) opposée à la tête (11) se trouve au niveau (13) du fond (5) du pot.

3. Pot de culture suivant les revendications 1 et 2, caractérisé en ce que la flèche (10) est disposée en relief par rapport à une surface d'introduction (9) parallèle au fond (5) du pot, la tête (11) de la flèche au départ du niveau de cette surface d'introduction (9), s'élevant progressivement au niveau (13) du fond du pot.

4. Pot de culture suivant la revendication 3, caractérisé en ce que la tête (11) de la flèche s'étend jusqu'à l'ouverture en forme de fente (8).

5. Pot de culture suivant la revendication 4, caractérisé en ce qu'une partie amincie doit être sectionnée pour former l'ouverture.

_Fig. 1_

_Fig. 2_

_Fig. 3_